# EUROPEAN PATENT SPECIFICATION

(11) **EP 3 310 224 B1**
(45) Date of publication and mention of the grant of the patent: **07.08.2019**
(21) Application number: 16728975.0
(22) Date of filing: 15.06.2016
(51) Int. Cl.: A47J 43/046, A47J 43/07

(54) **REMOVAL ASSISTANCE FOOD PROCESSOR IMPELLER**
KÜCHENMASCHINENLAUFRAD MIT AUSBAUUNTERSTÜTZUNG
ROUE DE PROCESSEUR ALIMENTAIRE AVEC ASSISTANCE DE RETRAIT

(30) Priority: 16.06.2015 EP 15172389
(43) Date of publication of application: 25.04.2018
(73) Proprietor: Société des Produits Nestlé S.A., 1800 Vevey (CH)
(72) Inventor: ABDO, Samer, 1027 Lonay (CH); DECASTEL, Sylvain, 1617 Remaufens (CH); DENISART, Jean-Luc, 1096 Cully (CH); GUYON, Bertrand, 25160 Saint Point Lac (FR); MAGATTI, Marco, 1010 Lausanne (CH); PERRIN, Alexa, 1073 Savigny (CH); PONT, Didier, 1446 Baulmes (CH); RAAD, Mohamed, 1004 Lausanne (CH); SEYDOUX, Laurent, 1673 Gillarens (CH)
(74) Representative: Schnyder, Frank Simon
(86) International application number: PCT/EP2016/063665
(87) International publication number: WO 2016/202815

(56) References cited:
- EP-A1- 2 526 844
- WO-A1-2012/003624
- WO-A2-02/096761
- WO-A2-2004/030498
- CN-A- 104 414 475
- CN-U- 203 263 141
- CN-U- 203 424 837
- CN-U- 203 619 394
- DE-A1- 1 554 670
- DE-U- 1 724 140
- DE-U1-202014 100 794

## Description

### Field of the Invention

The field of the invention pertains to machines for homogenising a food substance, such as frothing milk or a milk-containing substance. The machine is provided with an impeller for imparting a mechanical effect to the food substance.

### Background Art

Speciality beverages in which at least a portion is made up of frothed or heated milk are becoming more and more popular. The best-known beverage of this type is a coffee of the cappuccino type. It comprises a liquid portion consisting of coffee topped by a layer of frothed milk which, because of its very much lower density, floats atop the surface of the liquid. In general, preparing one takes time, manipulation operations and cleaning.

The most customary way of preparing a milk-based froth is to pour the desired amount of milk into the container, immerse a steam outlet pipe from a coffee machine in the container, agitating it up and down to introduce the air needed to form the froth.

There also exists mechanical stirring appliances which are usually intended for domestic use for beating froth from more or less viscous food products such as eggs, ice, juices or the like. These appliances are usually ill-suited to froth the microbiologically sensitive liquids such as milk. Regular cleaning of the tank of the appliance needs to be envisaged in order to remove any solid food residue. In addition, heating the milk has a tendency to increase the extent to which cooked or burnt proteins are deposited on and adhere to the surfaces. The existing appliances are not, for the most part, well suited to reducing the encrustation of this solid residue, making cleaning troublesome. These appliances also have a stirring and drive mechanism which is fixed and intrudes into the tank, and this presents several disadvantages: the removal/ refitting time is not insignificant, they have a tendency to become soiled more quickly, they entail additional cost as a result of the multiplicity of components, and the stirring means are difficult to clean.

US Patent 6,318,247 relates to an appliance for preparing hot beverages or food with stirring such as hot chocolate, for example. Other devices for stirring food products are described in patent documents WO 2004/043213 or DE 196 24 648. Stirring systems with a magnetic engagement type are described in documents US 2,932,493, DE 1 131 372, US 4,537,332 and US 6,712,497. DE 89 15 094 relates to a refrigerated pot for dispensing a milk-based beverage. US Patent 3,356,349 discloses a stirring device that has a heated tank, magnetic drive means positioned under the tank for driving a hub located in the middle of the tank.

An improved appliance for preparing froth from a milk-based liquid or milk has been proposed in EP 2 526 844, WO 2006/050900, WO 2008/142154, WO 2011/039222 and WO 2011/039224. The device has: an inner tank for receiving the liquid that is to be frothed, in which a rotatable stirrer is positioned; an outer stand holding the tank; drive and control means which are in a cavity located between the inner tank and the outer stand, and which communicate with a switch and electrical connections located on the outer surface of the stand; and disturbance means to optimise circulation of the milk during frothing. In WO 2010/023313 a steam source is associated with the stirring effect.

More recently, it has been proposed, as described in WO 2009/074555 and WO 2011/144647, to provide a coffee machine with this type of milk conditioning tank.

### Summary of the Invention

It is a preferred object of the present invention to provide a machine for homogenizing a food substance, such as frothing milk or a milk-based substance.

It is another preferred object of the present invention to provide a machine for homogenizing a food substance, which machine has an ergonomic impeller.

It is a preferred object of the present invention to provide a machine for heating a food substance which provides a more reliable heat management configuration.

Another preferred object of the present invention is to provide a hygienic machine for heating a food substance.

A further preferred object of the present invention is to provide a machine with an improved mechanical food conditioning of the food substance with or without heating, with or without cooling, of the food substance during conditioning.

The invention thus relates to a machine for homogenising a food substance, such as frothing milk or a milk-based substance.

The machine can be a standalone machine or a machine incorporated in a food processor such as a beverage maker e.g. a coffee maker.

The machine may be a standalone machine, e.g. directly pluggable to the mains via an electric cord, or may be integrated in a food processor arranged to process other food items or to carry out different food conditioning processes, the food processor itself being generally pluggable to the mains via an electric cord whereas the machine is a sub-part of the food processor. Such a food processor may be a beverage maker, such as a coffee maker, e.g. a beverage maker configured to prepare a beverage (such as coffee) from an ingredient capsule.

The machine of the invention may advantageously be configured to froth and/or heat and/or cool milk and optionally be associated, as a standalone machine or as an integrated machine, into a coffee maker. Standalone and integrated associations of milk frothing machines and coffee makers are for example disclosed in WO 2006/050900, WO 2008/142154, WO 2009/074555, WO 2010/023312 and WO 2010/023313.

Hence, the machine can be a milk frother which operates by incorporating finely divided gas bubbles, e.g. air bubbles, into milk. When the machine is configured for incorporating gas bubbles into the milk, it may include an operating mode without incorporation of gas bubbles.

The machine includes a container having a side wall and a bottom wall delimiting a cavity.

The container may be generally cup-shaped or bowl-shaped or cylinder-shaped, the sidewall being generally upright and the bottom wall being generally flat or curved.

The container can be provided with a thermally insulating outside material and/or with a handle, for seizure and optional displacement of the container by a human hand. Such a configuration is particularly advantageous when the food is processed at a higher temperature exceeding e.g. 50°C or below 10°C.

The container may be provided with an optional lid for confining the food substance within the cavity.

The container can be mechanically passive. Hence, beyond the inherent mechanical properties of the materials making its structure for containing the food substance and for being integrated or assembled in the machine, the container may be free of any mechanically active part such as a motor or movement transformation system which may require special care for hygiene or cleaning purposes.

The container can be electrically passive. Hence, beyond the inherent electric properties of the materials making its structure for containing the food substance and for being integrated or assembled in the machine, the container may be free of any electric active parts such as an electric circuit of discrete or integrated components (e.g. resistors, inductances, transistors,...) that require special care for hygiene or cleaning purposes.

By providing a container which is mechanically and/or electrically passive (optionally with a lid that is equally passive), it can easily be cleaned, e.g. in a dishwater, without any risk of damaging electric and/or mechanic components.

The machine has an impeller comprising an impelling member forming an impelling surface that is drivable in rotation about a central axial direction of the impelling surface for imparting a mechanical effect to the food substance in the container so as to homogenise different phases in the food substance.

For instance, the impelling surface extends over a predominant part of a bottom wall delimiting the cavity, such as an impelling surface having a surface area that is greater than 75 or 85% of the cavity's bottom wall.

The machine comprises a module which has a housing means that contains an inner chamber and that delimits a seat. When the machine is integrated in a food processor, e.g. a beverage maker such as a coffee machine, the machine's module may be integrated into the food processor whereas the container can be fixed to the module or removably mounted thereto.

The seat may be generally planar or cylindrical or cup-shaped. The container can be mounted, such as removably mounted, in or on this seat.

The container can be mounted, such as removably mounted, on or in the seat. The container may be assembled to or on the seat or simply placed on or in the seat. For instance, the container is removable from the seat for normal operation, e.g. to dispense the food substance, e.g. milk, from the container. The container can be removable from the seat for servicing or maintenances purposes only.

The chamber contains one or more electric components that include an electric motor for driving the impelling member in the container. The electric components may include a control unit and/or a power management unit.

Typically, such control unit is in data-communication with a user-interface for the input of user-requests corresponding to driving the impeller and/or other processes such as cooling and/or heating the container. The user interface can include one or more user-selectors, e.g. push and/or turn buttons, a touch-screen, touch-pad, etc...

The electric motor has an output drive axis with a driver device configured to drive in the container a follower device of the impeller.

The control unit, when present, may be programmed or otherwise configured to carry out one or more heating and/or cooling and/or mechanical conditioning profiles (e.g. using the impeller) on the food substance on request of a user. The control unit may for instance be associated with a memory device for storing the different programs that can be carried out by the control unit.

The driver device and the follower device may be configured to rotate about the central axial direction.

The driver device and the follower device are magnetically coupled through a sidewall and/or bottom wall of the container. The magnetic coupling force can be in the range of 3 to 50 such, as 5 to 25, e.g. 10 to 15 N.

The driver device comprises a magnetic field-generating element that is arranged to be magnetically coupled to a corresponding ferromagnetic or magnetic field-generating element of the follower device. Alternatively, the follower device comprises a magnetic field-generating element that is arranged to be magnetically coupled to a corresponding ferromagnetic element of the driver device.

In accordance with the invention, the module and the follower device are each provided with a removal magnetic field-generating element, the removal elements facing each other via the bottom wall of the container and optionally via the housing means. The removal elements are mounted in a mutually repulsive orientation to facilitate a separation of the follower device from the driver device.

The removal elements may face each other along an axis that is collinear with or generally parallel to the central axial direction. For instance, the removal elements comprise a pair of removal elements facing each other along the an axis that is collinear with the central axial direction.

The removal elements can generate together such a repulsive force that separating the follower device from the driver device (when magnetically coupled in the machine) requires a maximum force that is less than 15 N, such as less than 10 N, e.g. less than 5 N. This maximum force results from the difference between the (greater) overall coupling force and the (smaller) overall removal force.

The magnetic removal force itself (generated by the removal elements) can be in the range of 2 to 40 such, as 4 to 30, e.g. 8 to 15 N.

The module and the follower device may be provided with a plurality of pairs of such removal magnetic field-generating elements that are mounted in mutually repulsive orientation, optionally mounted about the central axial direction.

The removal element of the module can be located in or on: the driver device and/or the housing means.

For example, the removal magnetic field-generating elements act in mutual repulsion along or in parallel to the rotation axis of the driver device and follower device. The magnetic field-generating element(s) (and when present the ferromagnetic element) for coupling the driver and the follower devices can work in attraction along or in parallel to the rotation axis to transmit a transmission torque about the rotation axis when the driver device is moved in rotation whereby the follower device is driven magnetically to follow the driver device. In such a case, the repulsive elements act against the attraction of the coupling elements along the rotation axis without significantly reducing the attraction of the coupling elements about the rotation axis (i.e. the torque transmission). Such a configuration leads to the transmission of a high torque between the driver device and the follower device, especially when the magnetic coupling elements are located at extremal positions of the driver and follower devices, while limiting the mutual attraction between the driver and follower devices (reduced by the presence of the removal elements.

The use of such removal elements is particular advantageous when elements or relatively strong mutual attraction or retention are used to transmit a drive action from a motor to the impeller. Such removal elements can be oriented to separate the impeller from the container in a direction that is orthogonal to the movement (e.g. rotation) of the impeller in the container. Hence, the force (e.g. torque) for driving the impeller is not or significantly not affect by the removal elements that act against maintaining the impeller in the container.

The follower device may extend:
- over a predominant part of the bottom wall of the container, the follower device extending typically over at least 75 or 85% of a surface area of the bottom wall, the follower device having for instance the general shape of a plate, e.g. disc, extending over the bottom wall and generally in parallel thereto; or
- across a substantial part of the bottom wall along a diameter thereof, the follower device extending typically over at least 75 or 85% of a diameter of the bottom wall, the follower device can be an elongated generally rod-shaped or bar-shaped member (e.g. extending along the bottom wall's diameter) or be formed of a plurality of such elongated members (e.g. up to 6 or 10) in a star arrangement.

The driver device can extend:
- over a predominant part of a bottom part of the seat, the driver device extending typically over at least 75 or 85% of a surface area of the bottom part, the driver device having for instance the general shape of a plate, e.g. disc, extending over the bottom part and generally in parallel thereto; or
- across a substantial part of the bottom part of the seat along a diameter thereof, the driver device extending typically over at least 75 or 85% of a diameter of the bottom part, the driver device can be an elongated generally rod-shaped or bar-shaped member (e.g. extending along the bottom wall's diameter) or be formed of a plurality of such elongated members (e.g. up to 6 or 10) in a star arrangement.

The magnetic field generating element(s) and, when present, the ferromagnetic element(s) may be positioned at extremal or peripheral parts of the follower device and of the driver device.

In such a configuration of the field generating element(s) and (when present) of the optional ferromagnetic element(s), the torque transmission between the driver and follower devices via such elements can be maximised. This is particularly advantageous when the impeller has a high inertia and/or is exposed to a significant resistance, e.g. when the contact surface between the impeller and the food substance is high.

These elements may face each other via the sidewall and/or bottom wall of the container and optionally via the housing means. These elements can face each other via:
- the bottom wall along a coupling axis that is generally parallel to the central axial direction; and/or
- the sidewall along a coupling axis that is generally orthogonal to the sidewall, such as a coupling axis that intercepts the central axial direction.

The coupling and the removal magnetic field-generating element(s) may each comprise an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

The ferromagnetic element(s) can be made of at least one of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Electromagnetic elements may be used to control the position and/or the orientation of the impeller in the container.

The driver device can directly face the sidewall and/or bottom wall of the container.

The driver device may face indirectly the sidewall and/or bottom wall of the container via a housing inner sidewall and/or inner bottom wall delimiting the seat.

The impeller can have, further to the impelling member, a foot for spacing the impelling member above a bottom wall of the container, such as a foot spaced under the impelling member by a distance in the range of 0.5 to 2.5 cm e.g. 1 to 2 cm.

The impeller may have a foot that has a downwardly-oriented convex curved contact surface, e.g. a downwardly projecting pin, such that the impeller rests on the bottom wall entirely via this convex curved contact surface. The convex curved contact can be in contact with the bottom wall over a total surface area of typically less than 5 mm², such as less than 4 e.g. less than 3 for instance less than 2 for example less than 0.3 mm².

The contact surface can be made of hard polymeric material, such as hard plastic, or of food-safe stainless steel and be supported by a surface of the bottom wall made of ceramic material, such as PTFE, or of food-safe stainless steel e.g. AiSi 304 steel.

The impeller can be maintained in equilibrium on the downwardly-oriented convex curved contact surface:
- as a pendulum, by having its centre of gravity located vertically below the contact surface; or
- as an inverted pendulum, by having its centre of gravity located vertically above the contact surface and by being balanced by magnetic forces, e.g. by a self-adapting magnetic stabilising arrangement including for instance the magnetic field-generating element, and/or by being driven in rotation as a spinning top.

The impeller may have a foot that has the follower device.

The impelling surface may generally be disc-shaped or conically-shaped or shaped as a star.

The impelling surface can have at least one part protruding or recessed in a direction parallel to the axial direction, such as a part undulated along a circular direction about the axial direction or a surface with a generally upright radial protruding or recessed part.

The impelling member, especially when provided with a disc-shaped or conically-shaped impelling surface, may have at least one opening which extends through the member from the impelling surface to an opposite surface of the member. The opening can be a bubble refiner opening, such as an opening for refining gas bubbles contained in the food substance by dividing gas bubbles contained in the food substance, e.g. dividing air bubbles contained in milk.

Such opening can be delimited by at least one portion that has along the opening an orientation which is angled away from a direction of movement of the portion when the impelling surface is driven in rotation about the central axial direction. For instance, the orientation is orthogonal to the direction of movement.

The opening may be confined by a notional circular sector defined on the disc-shaped or conically-shaped impelling surface and extend to the opposite surface.

Such sector may extend over an angle in the range of 1 to 359°, such as 5 to 270°, e.g. 15 to 180° for instance 30 to 90°.

Portions of the member that are adjacent to radii defining the sector and that delimit the opening may be configured to part gas bubbles contained in the food substance when the gas bubbles extend into or through the opening while the impelling surface is driven in rotation.

At least one opening can have a generally arched shape, e.g. a general shape of a kidney or bean, such as a shape extending around the central axial direction.

At least one opening may have a generally circular shape, such as a circular shape that is located off the central axial direction.

At least one opening can have a generally oval or elliptic shape, such as a shape extending radially on the member.

At least one opening may have a generally polygonal shape such as a shape that is located off the central axial direction.

At least one opening can extend as (an) individual opening(s) from a position adjacent to the central axial direction to a position adjacent to a peripheral perimeter of the member.

At least one opening may be located next to the central axial direction.

At least one opening can be located on the central axial direction.

A plurality of openings may form an openwork of two or more spaced opening. The openings can be angled apart about the central axial direction. The openings may be contained within and radially extend over different juxtaposed or overlapping notional annulus which together extend substantially uninterruptedly over an overall notional continuous annulus.

The electric components can comprise one or more generators for heating and/or cooling the food substance in the container. The generator may be controlled by a control unit according to a processing program of the food substance, such as a program for driving the impeller with or without heating or cooling via the generator.

The one or more electric components can include an active cooling device, such as a refrigerating device, for cooling the food substance in the container. This cooling device may be activated and/or deactivated while driving the impeller.

The or at least one of the generators can be configured to generate an oscillating electromagnetic field directed to the container for heating the food substance in the container.

The generator can be configured to induce an electric heating current in an inductively heatable component of such machine, the inductively heatable component having a surface for radiating heat into the cavity. The component can be located in the cavity or form a wall of the container, whereby the component surface delimits the cavity. The component may be made of aluminium or food-safe stainless e.g. AiSi 304. The generator may include at least one induction coil, such as an induction coil located adjacent to the separation section.

The generator may be configured to emit microwaves for generating heating microwaves directly in the food substance in the container. Such a microwave generator can operate according to the known principles as for example known in the food heating technology, e.g. microwave ovens. The container can made of electrically non-conductive glass or polymeric material.

The machine of the invention can include a control system (e.g. contained in the control unit) of the heating and/or cooling generator(s) for:
- carrying out different heating/cooling profiles over time and/or for carrying out one or more heating/cooling profiles of constant or variable heating/cooling; and/or
- disabling the heating/cooling.

At least one of the above one or more electric components may radiate heat within the chamber when electrically powered. The heat may be generated by an electric resistance of the component.

The housing means can have a separation section and an outside section distinct from the separation section, the separation section and the outside section delimiting at least part of the chamber. The separation section may separate the chamber from the seat. The outside section can be separated from the seat by the chamber. The separation section and the outside section may have such respective thermal conductivities as to promote an evacuation of the heat radiated within the chamber outside the module via the outside section rather than into the container via the separation section.

The separation and the outside sections can be such that the ratio of heat evacuated via the outside section over heat evacuated via the separation section is of more than 2 such as at least 4 e.g. at least 9.

By providing a preferential heat evacuation path (via the outside section) from the module chamber to minimise a transfer of such heat into the container, the heat generated in the container originates mainly from the electromagnetic field directed to the container by the generator and is not or only insignificantly influenced by the heat generated within the module's chamber. Consequently, the heat generation depends predominantly on an appropriate control of the generator (rather than on unwanted heat generated within the chamber). As a corollary, when the generator is switched off because no heating is temporarily desired in the container (or when the container is actively cooled, when such feature is available), the container is not (or only insignificantly) exposed to unwanted heat from within the chamber. Indeed such unwanted heat is predominantly evacuated via the outside section to outside the machine rather than via the separation section into the seat and then into the container.

The separation section may surround at least partly the seat, the separation section forming for instance an upright wall surrounding the seat and/or a trough or platform delimiting a bottom of the seat.

The housing means may include a joining section that joins the separation section to the outside section, such as a joining section forming an outer sidewall of the housing means. The joining section may comprise the below-mentioned lateral section or may be a further section.

The outside section can form a base or foot of the housing means.

The housing means can include a lateral section extending laterally down along an edge of the outside section, such as a lateral section having one or more through openings for passing heat evacuated via the outside section from under the outside section to laterally outside the housing means.

The housing means may include a lateral section extending laterally down to above an edge of the outside section, the outside section having optionally one or more evacuation channels for passing heat evacuated via the outside section underneath the lateral section to outside the housing means.

The outside section may include a cooling device such as at least one of a radiator, a dissipator, e.g. a ventilator, and a heat sink. The cooling device may have a plurality of protrusions and recesses forming a surface for thermal exchange between the chamber and outside such machine. Such a cooling device can be different from a cooling device for cooling the food substance in the container.

The chamber can have a first chamber (e.g. sub-chamber) containing at least one of the electric motor, a control unit and a power management unit, such as a base chamber or a chamber below the seat.

The chamber may have second chamber (e.g. a sub-chamber) containing a heating and/or cooling generator, such as an upper chamber e.g. a chamber formed around the seat.

The first and second chambers can be separated by a partition section of the housing means.

The second chamber may be adjacent to the seat via the housing means. The first chamber can be distant to the seat or adjacent thereto via the housing means.

The machine can include a further food phase homogenisation device comprising at least one of:
- an expansion chamber such as a venturi chamber, e.g. as disclosed in WO01/26520 and WO2012/097916;
- a static mixer, e.g. as disclosed in WO2012/097916; and
- a couette flow device, e.g. as disclosed in WO2014/096183.

The further food phase homogenisation device can be located at an outlet of the container.

The further food phase homogenisation device may operate with steam and/or air in combination with said food substance e.g. milk.

### Brief Description of the Drawings

The invention will now be described with reference to the schematic drawings, wherein:
- Figure 1 is a cross-sectional perspective view of a machine having an impeller and a container according to the invention, the container being for instance mounted in a module;
- Figure 1a is an enlarged cross-sectional view of the central bottom part of the container of Fig. 1 when resting on the module of Fig. 1;
- Figures 2 is a cross-section of the module of Fig. 1 without container;
- Figure 3 is an external view of the module of Fig. 1;
- Figure 4 shows an outside section of the module of Fig. 1 which outside section is configured for evacuating heat outside the module;
- Figures 5 to 7 illustrate different impellers that can be placed into the container of Fig. 1 for imparting a mechanical effect to a food substance container in the container; and
- Figure 8 and 9 schematically illustrate two different configurations of the impeller resting in the container.

### Detailed description

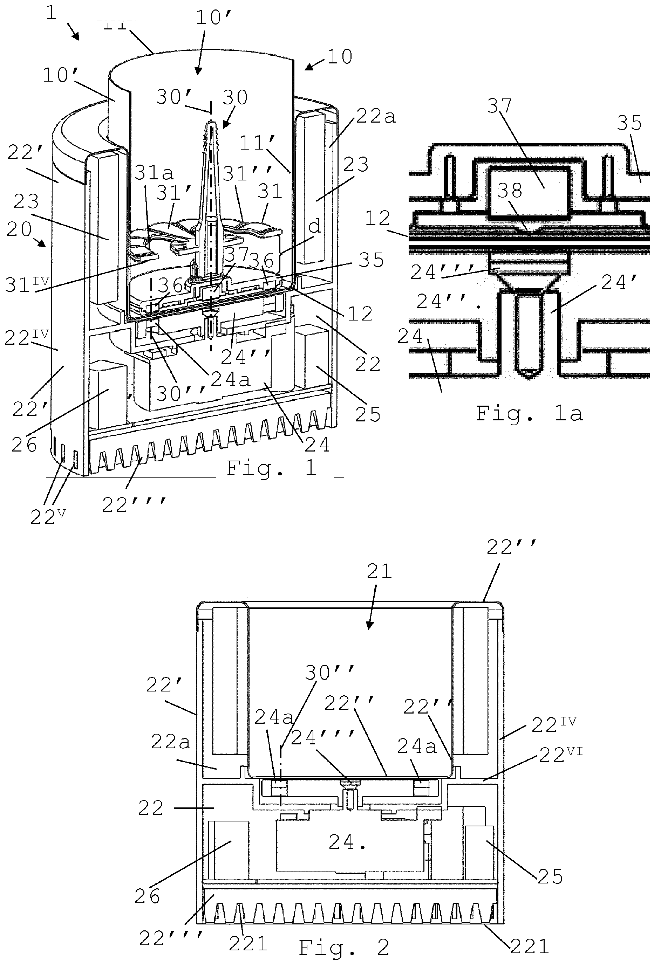

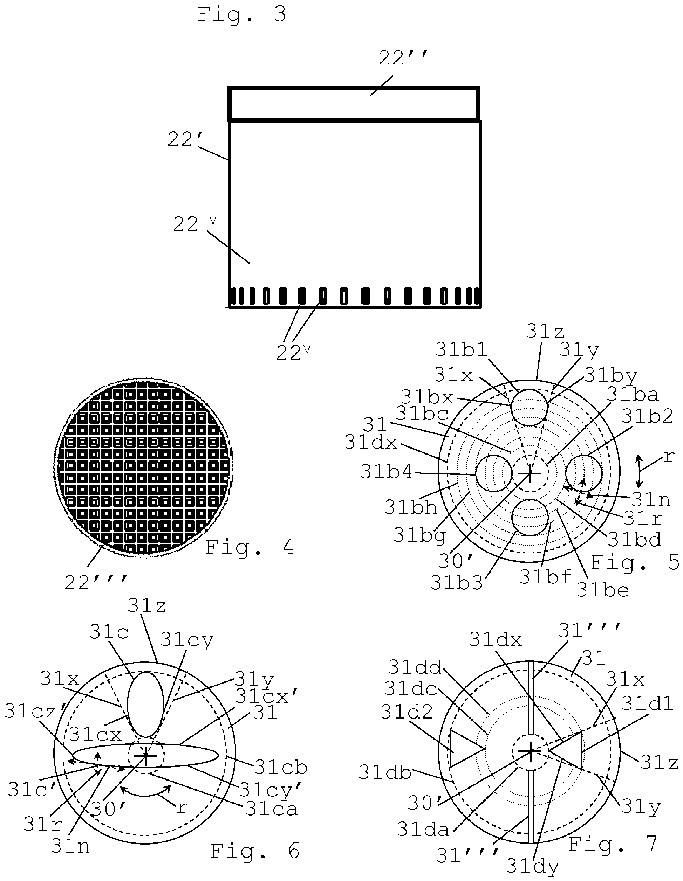

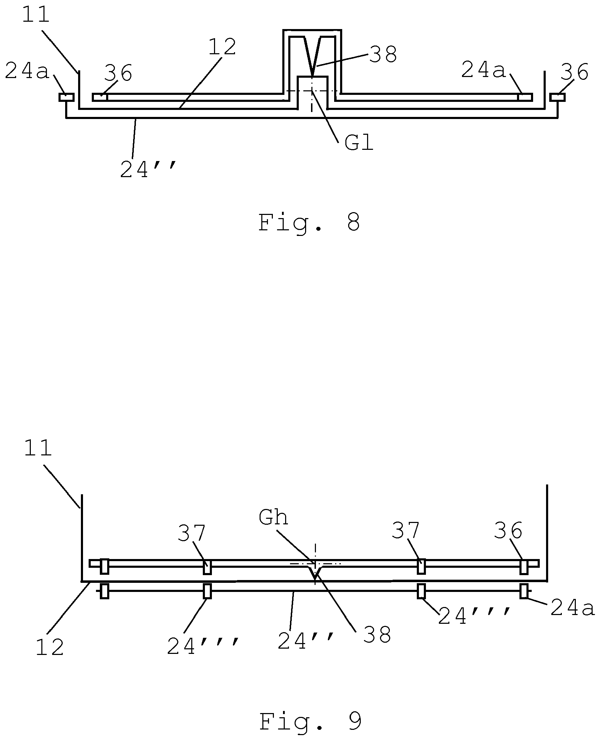

Figures 1 to 4 illustrate an embodiment of a machine 1 for homogenising a food substance, such as frothing milk or a milk-based substance. Figures 5 to 7 illustrate different impeller surfaces for imparting a mechanical effect to the food substance. Figures 8 and 9 illustrate different foot arrangements and magnetic arrangements of an impeller and module.

Machine 1 can be a standalone machine or a machine incorporated in a food processor such as a beverage maker e.g. a coffee maker.

Machine 1 includes a container 10, such as a mechanically and/or electrically passive container 10, having a side wall 11 and a bottom wall 12 delimiting a cavity 10'.

Container 10 can be generally cup-shaped or bowl-shaped or cylinder-shaped, sidewall 11 being generally upright and bottom wall 12 being generally flat or curved.

Container 10 may be provided with a thermally insulating outside material 10" and/or with a handle, for seizure and optional displacement of container 10 by a human hand.

Machine 1 has an impeller 30 comprising an impelling member 31 forming an impelling surface 31',31",31''' that is drivable in rotation r about a central axial direction 30' of impelling surface 31',31" ,31'" for imparting a mechanical effect to the food substance in container 10 to homogenise different phases in the food substance. Impelling surface 31',31",31''' may extend over a predominant part of bottom wall 12. Impelling surface 31',31",31''' can have a surface area that is greater than 75 or 85% of bottom wall 12.

Machine 1 includes a module 20 which has a housing means 22' that contains an inner chamber 22, 22a and that delimits a seat 21, such as a generally planar or cylindrical or cup-shaped seat 21, on or in which container 10 is mounted, such as removably mounted. Chamber 22,22a contains one or more electric components 23,24,25,26 that include an electric motor 24 for driving impelling member 31 in container 10. Electric components 23,24,25,26 may include a control unit 25 and/or a power management unit 26.

Electric motor 24 can have an output drive axis 24' with a driver device 24'' configured to drive in container 10 a follower device 35 of impeller 30. Driver device 24'' and follower device 25 may be configured to rotate about central axial direction 30'. Driver device 24'' and follower device 35 are magnetically coupled through a sidewall 11 and/or bottom wall 12 of container 10.

Driver device 24'' may have a magnetic field-generating element 24a that is arranged to be magnetically coupled to a corresponding ferromagnetic or magnetic field-generating element 36 of follower device 35. Alternatively, follower device 24'' can have a magnetic field-generating element 36 that is arranged to be magnetically coupled to a corresponding ferromagnetic element 24a of driver device 35.

Module 20 and follower device 35 are each provided with a removal magnetic field-generating element 24''',37, such as removal elements 24''',37 that face each other via bottom wall 12 of container 10 and optionally via the housing means 22'. Removal elements are mounted in a mutually repulsive orientation to facilitate a separation of follower device 35 from driver device 24".

Removal elements 24''',37 may face each other along an axis 30' that is collinear with or generally parallel to central axial direction 30', removal elements 24''',37 comprising for instance a pair removal elements 24''',37 facing each other along an axis 30' that is collinear with central axial direction 30'.

Removal elements 24''',37 may generate together such a repulsive force that separating follower device 35 from driver device 24" (when magnetically coupled) requires a maximum force that is less than 15 N, such as less than 10 N, e.g. less than 5 N. This maximum force results from the difference between the (greater) overall coupling force and the (smaller) overall removal force.

The magnetic removal force itself (generated by the removal elements) can be in the range of 2 to 40 such, as 4 to 30, e.g. 8 to 15 N.

The module and the follower device can be provided with a plurality of pairs of such removal magnetic field-generating elements that are mounted in mutually repulsive orientation, optionally mounted about the central axial direction.

Removal element 24''' of module 20 can be located in or on: driver device 24" and/or housing means 22'.

Follower device 35 may extend: over a predominant part of bottom wall 12, follower device 35 extending typically over at least 75 or 85% of a surface area of bottom wall 12; or across a substantial part of the bottom wall 12 along a diameter thereof, follower device 35 extending typically over at least 75 or 85% of a diameter of the bottom wall.

Driver device 24 can extend: over a predominant part of bottom part of seat 21, driver device 24 extending typically over at least 75 or 85% of a surface area of the bottom part; or across a substantial part of the bottom part of seat 21 along a diameter thereof, driver device 24 extending typically over at least 75 or 85% of a diameter of the bottom part.

Coupling magnetic field generating element(s) 24a,36 and, when present, ferromagnetic element(s) 24a,36 can be positioned at extremal or peripheral parts of follower device 35 and of driver device 24".

Coupling elements 24a,36 can face each other via sidewall 11 and/or bottom wall 12 of container 10 and optionally via housing means 22'. For instance, coupling elements 24a,36 face each other via:
- bottom wall 12 along a coupling axis 30" that is generally parallel to central axial direction 30'; and/or
- the sidewall along a coupling axis that is generally orthogonal to the sidewall, such as a coupling axis that intercepts the central axial direction.

The coupling and the removal magnetic field-generating element(s) 24a,36 may each include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

Ferromagnetic element(s) 24a,36 can be made of at least one of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Driver device 24" may face directly sidewall 11 and/or bottom wall 12 of container 10.

Driver device 24" can face indirectly sidewall 11 and/or bottom wall 12 of container 10 via a housing inner sidewall and/or inner bottom wall 22" delimiting seat 21.

Impeller 30 may have, further to impelling member 31, a foot 35, 38 for spacing impelling member 31 above bottom wall 12 of container 10. Foot 35,38 may be spaced under impelling member 31 by a distance d in the range of 0.5 to 2.5 cm e.g. 1 to 2 cm.

Impeller 30 can have a foot 35,38 that has a downwardly-oriented convex curved contact surface 38, e.g. a downwardly projecting pin 38, such that impeller 30 rests on bottom wall 12 entirely via convex curved contact surface 38. Convex curved contact can be in contact with bottom wall 12 over a total surface area of typically less than 5 mm², such as less than 4 e.g. less than 3 for instance less than 2 for example less than 0.3 mm².

For instance, contact surface 38 is made of hard polymeric material, such as hard plastic, or of food-safe stainless steel and is supported by a surface of bottom wall 12 made of ceramic material, such as PTFE, or of food-safe stainless steel e.g. AiSi 304 steel.

Impeller 30 may be maintained in equilibrium on downwardly-oriented convex curved contact surface 38:
- as a pendulum, by having its centre of gravity Gl located vertically below contact surface 38 (Fig. 8); or
- as an inverted pendulum, by having its centre of gravity Gh located vertically above contact surface 38 and by being balanced by magnetic forces, e.g. by a self-adapting magnetic stabilising arrangement including for instance magnetic field-generating element 24a,36, and/or by being driven in rotation as a spinning top. See Fig. 9.

Motor 24 of the embodiments schematically illustrated in Figs 8 and 9 can be a motor formed of a sole stator driving the follower device as a rotor or a motor with an output axis having a driving device driving the follower device.

Impeller 30 may incorporate follower device 35.

Impelling surface 31',31",31''' can be generally disc-shaped or conically-shaped or shaped as a star. Impelling surface 31',31",31''' may have at least one part 31',31",31''' protruding or recessed in a direction parallel to axial direction 30', such as a part 31',31" undulated along a circular direction about axial direction 30' or a surface with a generally upright radial protruding or recessed part 31"'.

Impelling member 31 may have at least one opening 31a,31b1,31b2,31b4,31b4,31c,31c',31d1,31d2 which extends through member 31 from impelling surface 31',31",31''' to an opposite surface 31^{IV} of member 31. The opening can be a bubble refiner opening 31a,31b1,31b2,31b4,31b4,31c, 31c',31d1,31d2, e.g. operating by dividing gas bubbles contained in the food substance for instance to divide air bubbles contained in milk.

Opening 31a,31b1,31b2,31b4,31b4,31c,31c',31d1,31d2 can be delimited by at least one portion 31bx,31by,31cx, 31cy,31cx',31cy' that has along opening 31a,31b1,31b2, 31b4,31b4,31c,31c',31d1,31d2 an orientation 31n which is angled away from a direction of movement 31r of portion 31bx,31by,31cx,31xy,31cx',31cy' when impelling surface 31',31",31''' is driven in rotation r about central axial direction 30', such as an orientation 31n that is orthogonal to direction of movement 31r.

Opening 31a,31b1,31b2,31b4,31b4,31c,31c',31d1,31d2 may be confined by a notional circular sector 31x,31y,31z that is defined on disc-shaped or conically-shaped impelling surface 31',31",31''' and that extends to opposite surface 31^{IV}.

Such sector 31x,31y,31z can extend over an angle in the range of 1 to 359°, such as 5 to 270°, e.g. 15 to 180° for instance 30 to 90°.

Portions 31by,31by,31cx,31cy,31dx,31dy of member 31 that are adjacent to radii 31x,31y defining sector 31x,31y,31z and that delimit such opening 31a,31b1,31b2, 31b4,31b4,31c,31d1,31d2 can be configured to part gas bubbles contained in the food substance when the gas bubbles extend into or through opening 31a,31b1,31b2,31b4,31b4,31c,31d1,31d2 while impelling surface 31',31",31''' is driven in rotation.

At least one opening 31a can have a generally arched shape, e.g. a general shape of a kidney or bean, such as a shape 31a extending around central axial direction 30'.

At least one opening 31b1,31b2,31b3,31b4 may have a generally circular shape, such as a circular shape that is located off the central axial direction 30'.

At least one opening 31c,31c' can have a generally oval or elliptic shape, such as a shape extending radially on the member 31.

At least one opening 31d1,31d2 may have a generally polygonal shape such as a shape that is located off central axial direction 30'.

At least one opening 31c may extend as (an) individual opening (s) from a position 31ca adjacent to central axial direction 30' to a position 31cb adjacent to a peripheral perimeter of member 31.

At least one opening 31a,31b1,31b2,31b4,31b4,31c, 31d1,31d2 can be located next to axial direction 30'.

At least one opening 31c' may be located on central axial direction 30'.

A plurality of openings 31b1,31b2,31b3,31b4;31c, 31c';31d1,31d2 may form an openwork of two or more spaced openings 31b1,31b2,31b3,31b4;31c,31c';31d1,31d2. Openings 31b1,31b2,31b3,31b4;31c,31c';31d1,31d2 can be angled apart about central axial direction 30'. Openings 31b1,31b2,31b3,31b4;31c,31c';31d1,31d2 may be contained within and radially extend over different juxtaposed or overlapping notional annulus 31ba_31bf,31bb_31be, 31bc_31bg,31bd_31bh;31da_31dd,31db_31dc which together extend substantially uninterruptedly over an overall notional continuous annulus 31ba_31bb;31da_31db.

Electric components 23,24,25,26 may include one or more generators 23 for heating and/or cooling the food substance in container 10.

Generator 23 may be controlled by a control unit 25 according to a processing program of the food substance, such as a program for driving the impeller 30 with or without heating or cooling via generator 23.

At least one generator 23 can be configured to generate an oscillating electromagnetic field directed to container 10 for heating the food substance therein.

Generator 23 can be configured to induce an electric heating current in an inductively heatable component 11 of such machine 1. Inductively heatable component 11 may have a surface 11' for radiating heat into cavity 10'. component 11 can be located in the cavity or can form a wall 11 of container 10, whereby component surface 11' delimits cavity 10'.

Generator 23 can include at least one induction coil, such as an induction coil located adjacent to separation section 22".

Generator 23 may emit microwaves for generating heating microwaves directly in the food substance in container 10.

At least one of electric components 23,24,25,26 may radiate heat within chamber 22,22a when electrically powered, such as heat generated by an electric resistance of component 23,24,25,26. Housing means 22' can have a separation section 22" and an outside section 22''' distinct from separation section 22". The separation section and the outside section may delimit at least part of chamber 22,22a. Separation section 22''' may separate chamber 22,22a from seat 21. Outside section 22''' can be separated from seat 21 by chamber 22,22a. Separation section 22" and outside section 22''' may have such respective thermal conductivities as to promote an evacuation of heat radiated within chamber 22,22a outside module 20 via outside section 22''' rather than into container 10 via separation section 22".

Separation and outside sections 22",22''' can be such that the ratio of heat evacuated via outside section 22''' over heat evacuated via separation section 22" is of more than 2 such as at least 4 e.g. at least 9.

Separation section 22" may surround at least partly seat 21, separation section 22" forming for instance an upright wall surrounding seat 21 and/or a trough or platform delimiting a bottom of seat 21.

Housing means 22' may have a joining section 22^{IV} that joins separation section 22" to outside section 22''', such as a joining section forming an outer sidewall of housing means 22'.

Outside section 22''' can form a base or foot of housing means 22'.

Housing means 22' can include a lateral section 22^{IV} extending laterally down along an edge of outside section 22"', such as a lateral section 22^{IV} having one or more through openings 22^{V} for passing heat evacuated via the outside section from under outside section 22''' to laterally outside housing means 22'.

Housing means 22' can include a lateral section 22^{IV} extending laterally down to above an edge of the outside section. For instance, the outside section has one or more evacuation channels for passing heat evacuated via the outside section underneath the lateral section to outside housing means 22'.

Outside section 22''' can include a cooling device such as at least one of a radiator, a dissipator, e.g. a ventilator, and a heat sink. Optionally, the cooling device comprises a plurality of protrusions 221 and recesses 222 forming a surface for thermal exchange between chamber 22,22a and outside such machine 1.

Chamber 22,22a may have a first chamber 22 containing at least one of electric motor 24, a control unit 25 and a power management unit 26, such as a base chamber 22 or a chamber below seat 21.

Chamber 22,22a may have a second chamber 22a containing a heating and/or cooling generator 23, such as an upper chamber e.g. a chamber formed around seat 21.

First and second chambers can be separated by a partition section 22^{V} of housing means 22'.

Second chamber 22a can be adjacent to seat 21 via housing means 21 and first chamber 22 can be distant to seat 21 or adjacent thereto via housing means 22'.

Machine 1 may incorporate a further food phase homogenisation device including at least one of:
- an expansion chamber such as a venturi chamber;
- a static mixer; and
- a couette flow device.

Such further food phase homogenisation device can be located at an outlet of container 10.

Such further food phase homogenisation device may operate with steam and/or air in combination with the food substance e.g. milk.

## Claims

1. A machine (1) for homogenising a food substance, such as frothing milk or a milk-based substance, as a standalone machine or as a machine incorporated in a food processor such as a beverage maker e.g. a coffee maker, such machine (1) comprising:
- a container (10), such as a mechanically and/or electrically passive container (10), having a side wall (11) and a bottom wall (12) delimiting a cavity (10'), the container being optionally
- generally cup-shaped or bowl-shaped or cylinder-shaped wherein the sidewall (11) is generally upright and the bottom wall (12) is generally flat or curved; and/or
- provided with a thermally insulating outside material (10") and/or with a handle, for seizure and optional displacement of the container (10) by a human hand;
- an impeller (30) comprising an impelling member (31) forming an impelling surface (31',31",31''') that is drivable in rotation (r) about a central axial direction (30') of the impelling surface (31',31",31''') for imparting a mechanical effect to said food substance in the container (10) to homogenise different phases in the food substance, optionally the impelling surface (31',31",31''') extends over a predominant part of the bottom wall (12), such as an impelling surface having a surface area that is greater than 75 or 85% of the cavity's bottom wall (12); and
- a module (20) which has a housing means (22') that contains an inner chamber (22,22a) and that delimits a seat (21), such as a generally planar or cylindrical or cup-shaped seat (21), on or in which the container (10) is mounted, such as removably mounted, the chamber (22,22a) containing one or more electric components (23,24,25,26) that include an electric motor (24) for driving the impelling member (31) in the container (10) and optionally a control unit (25) and/or a power management unit (26),
the electric motor (24) having an output drive axis (24') with a driver device (24") configured to drive in the container (10) a follower device (35) of the impeller (30), optionally the driver device (24") and the follower device (25) being configured to rotate about the central axial direction (30'), the driver device (24") and the follower device (35) being magnetically coupled through the sidewall (11) and/or bottom wall (12) of the container (10) and wherein:
- the driver device (24") comprises a coupling magnetic field-generating element (24a) that is arranged to be magnetically coupled to a corresponding ferromagnetic element (36) of the follower device (35);
- the follower device (35) comprises a coupling magnetic field-generating element (36) that is arranged to be magnetically coupled to a corresponding ferromagnetic element (24a) of the driver device (24"); or
- the driver device (24") comprises a coupling magnetic field-generating element (24a) that is arranged to be magnetically coupled to a corresponding coupling magnetic field-generating element (36) of the follower device (35),
**characterized in that** the module (20) and the follower device (35) are each provided with a removal magnetic field-generating element (24''',37),
wherein the removal elements (24''',37) face each other via the bottom wall (12) of the container (10), optionally the removal elements facing each other via the housing means (22'), the removal elements being mounted in a mutually repulsive orientation to facilitate a separation of the follower device (35) from the driver device (24"), optionally the removal element (24''',37) being associated with one or more of the following features:
A) the removal elements (24''',37) facing each other along an axis (30') that is collinear with or generally parallel to the central axial direction (30'), the removal elements (24''',37) comprising for instance a pair removal elements (24''',37) facing each other along an axis (30') that is collinear with the central axial direction (30');
B) the removal elements (24''',37) generating together such a repulsive force that separating the follower device (35) from the driver device (24'') when magnetically coupled requires a maximum force that is less than 15 N, such as less than 10 N, e.g. less than 5 N;
C) the module (20) and the follower device (35) being provided with a plurality of pairs of such removal magnetic field-generating elements that are mounted in mutually repulsive orientation, optionally mounted about the central axial direction; and
D) the removal element (24''') of the module (20) being located in or on: the driver device (24'') and/or the housing means (22').

2. The machine of claim 1, wherein the follower device (35) extends:
- over a predominant part of the bottom wall (12) of the container (10), the follower device (35) extending typically over at least 75 or 85% of a surface area of the bottom wall (12); or
- across a substantial part of the bottom wall (12) along a diameter thereof, the follower device (35) extending typically over at least 75 or 85% of a diameter of the bottom wall,
and wherein the driver device (24) extends:
- over a predominant part of a bottom part of the seat (21), the driver device (24) extending typically over at least 75 or 85% of a surface area of the bottom part; or
- across a substantial part of the bottom part of the seat (21) along a diameter thereof, the driver device (24) extending typically over at least 75 or 85% of a diameter of the bottom part,
the coupling magnetic field generating element(s) (24a,36) and, when present, the ferromagnetic element(s) (24a,36) being positioned at extremal or peripheral parts of the follower device (35) and of the driver device (24").

3. The machine of claim 1 or 2, wherein the coupling elements (24a,36) face each other via the sidewall (11) and/or bottom wall (12) of the container (10) and optionally via the housing means (22'), the elements (24a,36) facing each other for instance via:
- the bottom wall (12) along a coupling axis (30'') that is generally parallel to the central axial direction (30'); and/or
- the sidewall along a coupling axis that is generally orthogonal to the sidewall, such as a coupling axis that intercepts the central axial direction.

4. The machine of any preceding claim, wherein:
- the coupling and the removal magnetic field-generating element(s) (24a,36,24''',37) each comprises an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components; and/or
- the ferromagnetic element(s) (24a,36) is/are made of at least one of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

5. The machine of any preceding claim, wherein the driver device (24'') faces directly the sidewall (11) and/or bottom wall (12) of the container (10) or faces indirectly the sidewall (11) and/or bottom wall (12) of the container (10) via a housing inner sidewall and/or inner bottom wall (22") delimiting the seat (21).

6. The machine of any preceding claim, wherein the impeller (30) has, further to the impelling member (31), a foot (35,38) for spacing the impelling member (31) above the bottom wall (12) of the container (10), such as a foot (35,38) spaced under the impelling member (31) by a distance (d) in the range of 0.5 to 2.5 cm e.g. 1 to 2 cm.

7. The machine of any preceding claim, wherein the impeller (30) has a foot (35,38) comprising:
- a downwardly-oriented convex curved contact surface (38), e.g. a downwardly projecting pin (38), such that the impeller (30) rests on the bottom wall (12) entirely via said convex curved contact surface (38), the convex curved contact being in contact with the bottom wall (12) over a total surface area of typically less than 5 mm², such as less than 4 e.g. less than 3 for instance less than 2 for example less than 0.3 mm², optionally the contact surface (38) being made of hard polymeric material, such as hard plastic, or of food-safe stainless steel and being supported by a surface of the bottom wall (12) made of ceramic material, such as PTFE, or of food-safe stainless steel e.g. AiSi 304 steel; and/or
- the follower device (35).

8. The machine of any preceding claim, wherein the impelling surface (31',31",31''') is generally disc-shaped or conically-shaped or shaped as a star, optionally the impelling surface (31',31",31''') having at least one part (31',31",31''') protruding or recessed in a direction parallel to the axial direction (30'), such as a part (31',31") undulated along a circular direction about the axial direction (30') or a surface with a generally upright radial protruding or recessed part (31''').

9. The machine of claim 8, wherein the impelling member (31) has at least one opening (31a,31b1,31b2,31b4,31b4, 31c,31c',31d1,31d2), such as a bubble refiner opening (31a,31b1,31b2,31b4,31b4,31c,31c',31d1,31d2) e.g. operating by dividing gas bubbles contained in said food substance for instance to divide air bubbles contained in milk, which extends through the member (31) from the impelling surface (31',31",31''') to an opposite surface (31^{IV}) of the member (31), said opening (31a, 31b1, 31b2, 31b4,31b4,31c,31c',31d1,31d2) being:
- delimited by at least one portion (31bx,31by,31cx,31cy,31cx',31cy') that has along the opening (31a,31b1,31b2,31b4,31b4,31c,31c',31d1,31d2) an orientation (31n) which is angled away from a direction of movement (31r) of the portion (31bx,31by,31cx,31xy,31cx',31cy') when the impelling surface (31',31",31''') is driven in rotation (r) about the central axial direction (30'), such as an orientation (31n) that is orthogonal to the direction of movement (31r); and/or
- confined by a notional circular sector (31x,31y,31z) defined on the disc-shaped or conically-shaped impelling surface (31',31",31''') and extending to the opposite surface (31^{IV}), optionally:
- such sector (31x,31y,31z) extending over an angle in the range of 1 to 359°, such as 5 to 270°, e.g. 15 to 180° for instance 30 to 90°; and/or
- portions (31by,31by,31cx,31cy,31dx,31dy) of the member (31) that are adjacent to radii (31x,31y) defining such sector (31x,31y,31z) and that delimit such opening (31a,31b1,31b2,31b4,31b4,31c,31d1, 31d2) being configured to part gas bubbles contained in said food substance when the gas bubbles extend into or through the opening (31a,31b1,31b2,31b4,31b4,31c,31d1,31d2) while the impelling surface (31',31",31''') is driven in rotation.

10. The machine of claim 9, wherein one or more openings (31a,31b1,31b2,31b4,31b4,31c,31d1,31d2) exhibit at least one of the following features:
A) at least one opening (31a) having a generally arched shape, e.g. a general shape of a kidney or bean, such as a shape (31a) extending around the central axial direction (30');
B) at least one opening (31b1,31b2,31b3,31b4) having a generally circular shape, such as a circular shape that is located off the central axial direction (30');
C) at least one opening (31c,31c') having a generally oval or elliptic shape, such as a shape extending radially on the member (31);
D) at least one opening (31d1,31d2) having a generally polygonal shape such as a shape that is located off the central axial direction (30');
E) at least one opening (31c) extending as (an) individual opening(s) from a position (31ca) adjacent to the central axial direction (30') to a position (31cb) adjacent to a peripheral perimeter of the member (31);
F) at least one opening (31a,31b1,31b2,31b4,31b4,31c, 31d1,31d2) being located next to the central axial direction (30');
G) at least one opening (31c') being located on the central axial direction (30'); and
H) a plurality of openings (31b1,31b2,31b3,31b4;31c,31c'; 31d1,31d2) forming an openwork of two or more spaced openings (31b1,31b2,31b3,31b4;31c,31c';31d1,31d2), optionally:
- the openings (31b1,31b2,31b3,31b4;31c,31c';31d1, 31d2) being angled apart about the central axial direction (30'); and/or
- the openings (31b1,31b2,31b3,31b4;31c,31c';31d1, 31d2) being contained within and radially extend over different juxtaposed or overlapping notional annulus (31ba_31bf, 31bb_31be,31bc_31bg,31bd_31bh; 31da_31dd,31db_31dc) which together extend substantially uninterruptedly over an overall notional continuous annulus (31ba_31bb;31da_31db).

11. The machine of any preceding claim, wherein the electric components comprise one or more generators (23) for heating and/or cooling said food substance in the container (10), such as a generator (23) that is controlled by a control unit (25) according to a processing program of the food substance, such as a program for driving the impeller (30) with or without heating or cooling via the generator (23).

12. The machine of claim 11, wherein the or at least one of said generators (23) is configured to generate an oscillating electromagnetic field directed to the container (10) for heating said food substance in the container (10), optionally the generator (23) being configured to:
- induce an electric heating current in an inductively heatable component (11) of such machine (1), the inductively heatable component (11) having a surface (11') for radiating heat into the cavity (10'), the component (11) being located in the cavity or forming a wall (11) of the container (10) whereby the component surface (11') delimits the cavity (10'), optionally the generator (23) comprising at least one induction coil, such as an induction coil located adjacent to the separation section (22"); and/or
- emit microwaves for generating heating microwaves directly in said food substance in the container (10).

13. The machine of any preceding claim, wherein at least one of said one or more electric components (23,24,25,26) radiates heat within the chamber (22,22a) when electrically powered, such as heat generated by an electric resistance of the component (23,24,25,26), the housing means (22') having a separation section (22'') and an outside section (22''') distinct from the separation section (22"), the separation section and the outside section delimiting at least part of the chamber (22,22a), the separation section (22''') separating the chamber (22,22a) from the seat (21), the outside section (22''') being separated from the seat (21) by the chamber (22,22a), the separation section (22'') and the outside section (22''') having such respective thermal conductivities as to promote an evacuation of said heat radiated within the chamber (22,22a) outside the module (20) via the outside section (22''') rather than into the container (10) via the separation section (22''), optionally the housing means (22') having at least one of the following features:
- the separation and the outside sections (22",22''') are such that the ratio of heat evacuated via the outside section (22''') over heat evacuated via the separation section (22'') is of more than 2 such as at least 4 e.g. at least 9;
- the separation section (22'') surrounds at least partly the seat (21), the separation section (22'') forming for instance an upright wall surrounding the seat (21) and/or a trough or platform delimiting a bottom of the seat (21); and
- the housing means (22') comprises a joining section (22^{IV}) that joins the separation section (22'') to the outside section (22'''), such as a joining section forming an outer sidewall of the housing means (22').

14. The machine of claim 13, wherein the outside section (22''') :
A) forms a base or foot of the housing means (22'), the housing means (22') optionally including a lateral section (22^{IV}) extending laterally down:
- along an edge of the outside section (22'''), such as a lateral section (22^{IV}) having one or more through openings (22^{V}) for passing heat evacuated via the outside section from under the outside section (22''') to laterally outside the housing means (22'); or
- to above an edge of the outside section, the outside section having optionally one or more evacuation channels for passing heat evacuated via the outside section underneath the lateral section to outside the housing means (22');
and/or
B) includes a cooling device such as at least one of a radiator, a dissipator, e.g. a ventilator, and a heat sink, optionally the cooling device comprises a plurality of protrusions (221) and recesses (222) forming a surface for thermal exchange between the chamber (22,22a) and outside such machine (1).

15. The machine of any preceding claim, wherein the chamber (22,22a) comprises:
- a first chamber (22) containing at least one of the electric motor (24), a control unit (25) and a power management unit (26), such as a base chamber (22) or a chamber below the seat (21); and
- a second chamber (22a) containing a heating and/or cooling generator (23), such as an upper chamber e.g. a chamber formed around the seat (21),
optionally:
- the first and second chambers being separated by a partition section (22^{v}) of the housing means (22'); and/or
- the second chamber (22a) being adjacent to the seat (21) via the housing means (21) and the first chamber (22) being distant to the seat (21) or adjacent thereto via the housing means (22').

## Patentansprüche

1. Maschine (1) zur Homogenisierung einer Lebensmittelsubstanz, wie Schäumung von Milch oder einer Substanz auf Milchbasis, als eigenständige Maschine oder als Maschine, die in einen Lebensmittelprozessor, wie einen Getränkebereiter, z. B. einen Kaffeeautomaten, integriert ist, wobei die Maschine (1) umfasst:
- einen Behälter (10), wie etwa einen mechanisch und/oder elektrisch passiven Behälter (10), mit einer Seitenwand (11) und einer Bodenwand (12), die einen Hohlraum (10') begrenzen, wobei der Behälter wahlweise
- im Allgemeinen becherförmig oder schalenförmig oder zylinderförmig ist, wobei die Seitenwand (11) im Allgemeinen aufrecht ist und die Bodenwand (12) im Allgemeinen flach oder gekrümmt ist; und/oder
- mit einem wärmeisolierenden Außenmaterial (10") und/oder mit einem Griff zum Ergreifen und optionalen Verlagern des Behälters (10) durch eine menschliche Hand bereitgestellt ist;
- einen Antreiber (30), umfassend ein treibendes Teil (31), das eine treibende Oberfläche (31', 31", 31'") bildet, die in Drehung (r) um eine Zentralachsenrichtung (30') der treibenden Oberfläche (31', 31", 31'") antreibbar ist, um eine mechanische Wirkung auf die Lebensmittelsubstanz in dem Behälter (10) auszuüben, um unterschiedliche Phasen in der Lebensmittelsubstanz zu homogenisieren, wobei sich die treibende Oberfläche (31', 31", 31''') wahlweise über einen überwiegenden Teil der Bodenwand (12) erstreckt, wie etwa eine treibende Oberfläche mit einem Oberflächenbereich, der größer als 75 oder 85 % der Bodenwand (12) des Hohlraums ist; und
- ein Modul (20), das eine Gehäuseeinrichtung (22') aufweist, die eine Innenkammer (22, 22a) enthält und einen Sitz (21) begrenzt, wie etwa einen im Allgemeinen planaren oder zylindrischen oder schalenförmigen Sitz (21), an oder in dem der Behälter (10) angebracht ist, wie etwa lösbar angebracht ist, wobei die Kammer (22, 22a) eine oder mehrere elektrische Komponenten (23, 24, 25, 26) enthält, die einen Elektromotor (24) zum Antreiben des treibenden Teils (31) im Behälter (10), und wahlweise eine Steuereinheit (25) und/oder eine Leistungsverwaltungseinheit (26) einschließen,
wobei der Elektromotor (24) eine Ausgangsantriebsachse (24') mit einer Antriebsvorrichtung (24") aufweist, die zum Antreiben einer Mitnehmervorrichtung (35) des Antreibers (30) in dem Behälter (10) konfiguriert ist, wobei die Antriebsvorrichtung (24") und die Mitnehmervorrichtung (25) wahlweise dazu konfiguriert sind, sich um die Zentralachsenrichtung (30') zu drehen, wobei die Antriebsvorrichtung (24") und die Mitnehmervorrichtung (35) durch die Seitenwand (11) und/oder die Bodenwand (12) des Behälters (10) magnetisch gekoppelt sind, und wobei:
- die Antriebsvorrichtung (24") ein ein Magnetfeld erzeugendes Kopplungselement (24a) umfasst, das dazu angeordnet ist, magnetisch an ein entsprechendes ferromagnetisches Element (36) der Mitnehmervorrichtung (35) gekoppelt zu sein;
- die Mitnehmervorrichtung (35) ein ein Magnetfeld erzeugendes Kopplungselement (36) umfasst, das dazu angeordnet ist, magnetisch an ein entsprechendes ferromagnetisches Element (24a) der Antriebsvorrichtung (24") gekoppelt zu sein; oder
- die Antriebsvorrichtung (24") ein ein Magnetfeld erzeugendes Kopplungselement (24a) umfasst, das dazu angeordnet ist, magnetisch an ein entsprechendes, ein Magnetfeld erzeugendes Kopplungselement (36) der Mitnehmervorrichtung (35) gekoppelt zu sein,
**dadurch gekennzeichnet, dass** das Steuermodul (20) und die Mitnehmervorrichtung (35) jeweils mit einem ein Magnetfeld erzeugenden Löseelement (24''', 37) bereitgestellt sind, wobei die Löseelemente (24"', 37) einander über die Bodenwand (12) des Behälters (10) zugewandt sind, wobei die Löseelemente einander wahlweise über die Gehäuseeinrichtung (22') zugewandt sind, wobei die Löseelemente in einer sich gegenseitig abstoßenden Ausrichtung angebracht sind, um eine Trennung der Mitnehmervorrichtung (35) von der Antriebsvorrichtung (24") zu ermöglichen, wobei das Löseelement (24"', 37) wahlweise einem oder mehreren der folgenden Merkmale zugeordnet ist:
A) die Löseelemente (24'", 37) sind einander entlang einer Achse (30') zugewandt, die kollinear mit oder allgemein parallel zur Zentralachsenrichtung (30') ist, wobei die Löseelemente (24"', 37) zum Beispiel ein Paar Löseelemente (24"', 37) umfassen, die einander entlang einer Achse (30') zugewandt sind, die kollinear mit der Zentralachsenrichtung (30') ist;
B) die Löseelemente (24"', 37) erzeugen zusammen eine solche abstoßende Kraft, dass das Trennen der Mitnehmervorrichtung (35) von der Antriebsvorrichtung (24") bei magnetischer Kopplung eine maximale Kraft von weniger als 15 N, wie etwa weniger als 10 N, z. B. weniger als 5 N erfordert;
C) das Modul (20) und die Mitnehmervorrichtung (35) sind mit einer Vielzahl von Paaren dieser ein Magnetfeld erzeugenden Löseelemente bereitgestellt, die in einer einander abstoßenden Ausrichtung angebracht sind, wahlweise um die Zentralachsenrichtung angebracht sind; und
D) das Löseelement (24''') des Moduls (20) befindet sich in oder an: der Mitnehmervorrichtung (24") und/oder der Gehäuseeinrichtung (22').

2. Maschine nach Anspruch 1, wobei sich die Mitnehmervorrichtung (35) wie folgt erstreckt:
- über einen überwiegenden Teil der Bodenwand (12) des Behälters (10), wobei sich die Mitnehmervorrichtung (35) in der Regel über mindestens 75 oder 85 % eines Oberflächenbereichs der Bodenwand (12) erstreckt; oder
- über einen wesentlichen Teil der Bodenwand (12) entlang eines Durchmessers davon, wobei sich die Mitnehmervorrichtung (35) in der Regel über mindestens 75 oder 85 % eines Durchmessers der Bodenwand erstreckt,
und wobei sich die Antriebsvorrichtung (24) wie folgt erstreckt:
- über einen überwiegenden Teil eines Bodenteils des Sitzes (21), wobei sich die Antriebsvorrichtung (24) in der Regel über mindestens 75 oder 85 % eines Oberflächenbereichs des Bodenteils erstreckt; oder
- über einen wesentlichen Teil des Bodenteils des Sitzes (21) entlang eines Durchmessers davon, wobei sich die Antriebsvorrichtung (24) in der Regel über mindestens 75 oder 85 % eines Durchmessers des Bodenteils erstreckt,
wobei das oder die ein Magnetfeld erzeugenden Kopplungselemente (24a, 36) und, wenn vorhanden, das oder die ferromagnetischen Elemente (24a, 36) an äußersten oder Peripherieteilen der Mitnehmervorrichtung (35) und der Antriebsvorrichtung (24") angeordnet sind.

3. Maschine nach Anspruch 1 oder 2, wobei die Kopplungselemente (24a, 36) einander über die Seitenwand (11) und/oder Bodenwand (12) des Behälters (10) und wahlweise über die Gehäuseeinrichtung (22') zugewandt sind, wobei die Elemente (24a, 36) einander zum Beispiel zugewandt sind über:
- die Bodenwand (12) entlang einer Kopplungsachse (30"), die allgemein parallel zur Zentralachsenrichtung (30') ist; und/oder
- die Seitenwand entlang einer Kopplungsachse, die allgemein orthogonal zu der Seitenwand ist, wie etwa eine Kopplungsachse, die die Zentralachsenrichtung schneidet.

4. Maschine nach einem der vorhergehenden Ansprüche, wobei:
- das/die ein Magnetfeld erzeugende(n) Kopplungs- und Löseelement(e) (24a, 36, 24''', 37) jeweils ein Elektromagnetelement oder ein Permanentmagnetelement umfassen, das z. B. aus mindestens einem von Eisen, Nickel, Kobalt, Seltenerdenmetallen, z. B. Lanthanid, und Legierungen und Oxiden, die solche Metalle enthalten, sowie Polymeren (z. B. Kunststoffen), die solche Elemente und Komponenten tragen, hergestellt ist; und/oder
- das oder die ferromagnetischen Elemente (24a, 36) gebildet sind aus mindestens einem von Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAI, Cu₂Mnln, Cu₂MnSn, Ni₂MnAl, Ni₂Mnln, Ni₂MnSn, Ni₂MnSb, Ni₂MnGa, Co2MnAI, Co2MnSi, Co2MnGa, Co₂MnGe, SmCo₅, Sm₂C017, Pd2MnAI, Pd2MnAI, Pd₂Mnln, Pd₂MnSn, Pd₂MnSb, Co₂FeSi, Fe₃Si, Fe₂Val, Mn₂VGa und Co₂FeGe.

5. Maschine nach einem der vorhergehenden Ansprüche, wobei die Antriebsvorrichtung (24") der Seitenwand (11) und/oder der Bodenwand (12) des Behälters (10) direkt zugewandt ist oder der Seitenwand (11) und/oder der Bodenwand (12) des Behälters (10) indirekt über eine den Sitz (21) begrenzende Gehäuseinnenwand und/oder innere Bodenwand (22") zugewandt ist.

6. Maschine nach einem der vorhergehenden Ansprüche, wobei der Antreiber (30) zusätzlich zu dem treibenden Teil (31) einen Fuß (35, 38) zum Beabstanden des treibenden Teils (31) über der Bodenwand (12) des Behälters (10) aufweist, wie etwa einen Fuß (35, 38), der unter dem treibenden Teil (31) mit einem Abstand (d) im Bereich von 0,5 bis 2,5 cm, z. B. 1 bis 2 cm, beabstandet ist.

7. Maschine nach einem der vorhergehenden Ansprüche, wobei der Antreiber (30) einen Fuß (35, 38) aufweist, umfassend:
- eine nach unten gerichtete, konvex gekrümmte Kontaktoberfläche (38), z. B. einen nach unten vorstehenden Stift (38), derart, dass der Antreiber (30) vollständig über die konvex gekrümmte Kontaktoberfläche (38) auf der Bodenwand (12) ruht, wobei der konvex gekrümmte Kontakt über einen Gesamtoberflächenbereich von in der Regel weniger als 5 mm², wie etwa weniger als 4, z. B. weniger als 3, zum Beispiel weniger als 2, zum Beispiel weniger als 0,3 mm² in Kontakt mit der Bodenwand (12) steht, wobei die Kontaktoberfläche (38) wahlweise aus hartem Polymermaterial hergestellt ist, wie etwa Hartkunststoff oder lebensmittelsicherem Edelstahl, und durch eine Oberfläche der Bodenwand (12) aus Keramikmaterial, wie etwa PTFE, oder lebensmittelsicherem Edelstahl, z. B. AiSi-304-Stahl, abgestützt ist; und/oder
- die Mitnehmervorrichtung (35).

8. Maschine nach einem der vorhergehenden Ansprüche, wobei die treibende Oberfläche (31', 31", 31''') allgemein scheibenförmig oder konisch geformt oder sternförmig ist, wobei die treibende Oberfläche (31', 31", 31'") wahlweise mindestens einen Teil (31', 31", 31'") aufweist, der in einer Richtung parallel zur Axialrichtung (30') vorspringt oder vertieft ist, wie etwa ein Teil (31', 31"), der in einer Kreisrichtung um die Axialrichtung (30') gewellt ist, oder eine Oberfläche mit einem allgemein aufragenden radial vorspringenden oder vertieften Teil (31''').

9. Maschine nach Anspruch 8, wobei das treibende Teil (31) mindestens eine Öffnung (31a, 31b1, 31b2, 31b4, 31c, 31c', 31d1, 31d2) aufweist, wie etwa eine Blasenverfeinerungsöffnung (31a, 31 b1,31 b2, 31 b4, 31c, 31c', 31d1, 31d2), die z. B. wirkt, indem sie Gasblasen, die in der Lebensmittelsubstanz enthalten sind, - teilt, um zum Beispiel Luftblasen zu teilen, die in Milch enthalten sind, und die sich von der treibenden Oberfläche (31', 31", 31'") zu einer gegenüberliegenden Oberfläche (31^{IV}) des Teils (31) durch das Teil (31) erstreckt, wobei die Öffnung (31a, 31b1, 31b2, 31b4, 31b4, 31c, 31c', 31d1, 31d2):
- durch mindestens einen Abschnitt (31 bx, 31 by, 31cx, 31 cy, 31cx', 31 cy') begrenzt ist, der entlang der Öffnung (31a, 31b1, 31b2, 31b4, 31c, 31c', 31d1, 31 d2) eine Ausrichtung (31n) aufweist, die von einer Bewegungsrichtung (31 r) des Abschnitts (31 bx, 31 by, 31 cx, 31cy, 31cx', 31cy') abgewinkelt ist, wenn die treibende Oberfläche (31', 31", 31''') in Drehung (r) um die Zentralachsenrichtung (30') angetrieben wird, wie etwa in einer Ausrichtung (31n) orthogonal zur Bewegungsrichtung (31r); und/oder
- durch einen gedanklichen Kreissektor (31 x, 31 y, 31z) begrenzt ist, der an der scheibenförmigen oder konisch geformten treibenden Oberfläche (31', 31", 31'") definiert ist und sich zur gegenüberliegenden Oberfläche (31^{IV}) erstreckt,
wobei wahlweise:
- der Sektor (31 x, 31 y, 31z) sich über einen Winkel im Bereich von 1 bis 359°, wie 5 bis 270°, z. B. 15 bis 180°, zum Beispiel 30 bis 90°, erstreckt; und/oder
- Abschnitte (31by, 31by, 31cx, 31cy, 31dx, 31dy) des Teils (31), die benachbart zu Radien (31x, 31y) sind, die diesen Sektor (31 x, 31 y, 31z) definieren, und die diese Öffnung (31a, 31b1, 31b2, 31b4, 31b4, 31c, 31d1, 31d2) begrenzen, wobei diese dazu konfiguriert sind, Gasblasen, die in der Lebensmittelsubstanz enthalten sind, zu teilen, wenn sich die Gasblasen in oder durch die Öffnung (31a, 31b1, 31b2, 31 b4, 31c, 31c', 31d1, 31d2) erstrecken, während die treibende Oberfläche (31', 31", 31'") in Drehung angetrieben wird.

10. Maschine nach Anspruch 9, wobei eine oder mehrere Öffnungen (31a, 31b1, 31b2, 31b4, 31b4, 31c, 31d1, 31d2) mindestens eins der folgenden Merkmale aufweisen:
A) mindestens eine Öffnung (31a) weist im Wesentlichen eine Bogenform auf, z. B. eine allgemeine Form einer Niere oder Bohne, wie eine Form (31a), die sich um die Zentralachsenrichtung (30') erstreckt;
B) mindestens eine Öffnung (31b1, 31b2, 31b3, 31b4) weist im Wesentlichen eine Kreisform auf, wie etwa eine Kreisform, die versetzt von der Zentralachsenrichtung (30') ist;
C) mindestens eine Öffnung (31c, 31c') weist eine allgemein ovale oder elliptische Form auf, wie etwa eine sich radial an dem Teil (31) erstreckenden Form;
D) mindestens eine Öffnung (31b1, 31d2) weist allgemein eine polygonale Form auf, wie etwa eine Form, die versetzt von der Zentralachsenrichtung (31') ist;
E) mindestens eine Öffnung (31c) erstreckt sich als (eine oder) mehrere einzelne Öffnung(en) von einer Position (31ca) benachbart zu der Zentralachsenrichtung (30') zu einer Position (31cb) benachbart zu einem peripheren Umfang des Teils (31);
F) mindestens eine Öffnung (31a, 31b1, 31b2, 31b4, 31b4, 31c, 31d1, 31d2) ist neben der Zentralachsenrichtung (30') angeordnet;
G) mindestens eine Öffnung (31 c') ist an der Zentralachsenrichtung (30') angeordnet; und
H) eine Vielzahl von Öffnungen (31b1, 31b2, 31b3, 31b4; 31c, 31c'; 31d1, 31d2) bildet ein Durchbruchmuster von zwei oder mehr beabstandeten Öffnungen (31b1, 31b2, 31b3, 31b4; 31c, 31c'; 31d1, 31d2), wobei wahlweise:
- die Öffnungen (31b1, 31b2, 31b3, 31b4; 31c, 31c'; 31d1, 31d2) um die Zentralachsenrichtung (30') voneinander abgewinkelt sind; und/oder
- die Öffnungen (31b1, 31b2, 31b3, 31b4; 31c, 31c'; 31d1, 31d2) in verschiedenen nebeneinander liegenden oder überlappenden gedanklichen Ringen (31ba_31bf, 31bb_31be, 31bc_31bg, 31bd_31bh; 31da_31dd, 31db_31dc), die sich gemeinsam ohne Unterbrechung über einen gedanklichen kontinuierlichen Gesamtring (31ba_31bb; 31da_31db) erstrecken, enthalten sind und sich radial darüber erstrecken.

11. Maschine nach einem der vorhergehenden Ansprüche, wobei die elektrischen Komponenten einen oder mehrere Generatoren (23) zum Erwärmen und/oder Kühlen der Lebensmittelsubstanz in dem Behälter (10) umfassen, wie etwa einen Generator (23), der durch eine Steuereinheit (25) gemäß einem Verarbeitungsprogramm der Lebensmittelsubstanz gesteuert wird, wie etwa einem Programm zum Antreiben des Antreibers (30) mit oder ohne Erwärmen oder Kühlen über den Generator (23).

12. Maschine nach Anspruch 11, wobei der oder mindestens einer der Generatoren (23) dazu konfiguriert ist, ein auf den Behälter (10) gerichtetes, oszillierendes elektromagnetisches Feld zu erzeugen, um die Lebensmittelsubstanz im Behälter (10) zu erwärmen, wobei der Generator (23) wahlweise konfiguriert ist zum:
- Induzieren eines elektrischen Heizstroms in einer induktiv beheizbaren Komponente (11) der Maschine (1), wobei die induktiv beheizbare Komponente (11) eine Oberfläche (11') zum Abstrahlen von Wärme in den Hohlraum (10') aufweist, wobei die Komponente (11) in dem Hohlraum angeordnet ist oder eine Wand (11) des Behälters (10) bildet, wobei die Komponentenoberfläche (11') den Hohlraum (10') begrenzt, wobei der Generator (23) wahlweise mindestens eine Induktionsspule umfasst, wie etwa eine Induktionsspule, die benachbart zu dem Trennabschnitt (22") angeordnet ist; und/oder
- Abstrahlen von Mikrowellen zum Erzeugen von Heizmikrowellen direkt in der Lebensmittelsubstanz im Behälter (10).

13. Maschine nach einem der vorhergehenden Ansprüche, wobei mindestens eine der einen oder mehreren elektrischen Komponenten (23, 24, 25, 26) Wärme innerhalb der Kammer (22, 22a) abstrahlt, wenn sie elektrisch betrieben wird, wie etwa Wärme, die durch einen elektrischen Widerstand der Komponente (23, 24, 25, 26) erzeugt wird, wobei die Gehäuseeinrichtung (22') einen Trennabschnitt (22") und einen Außenabschnitt (22"') aufweist, der von dem Trennabschnitt (22") verschieden ist, wobei der Trennabschnitt und der Außenabschnitt mindestens einen Teil der Kammer (22 22a) begrenzen, wobei der Trennabschnitt (22"') die Kammer (22, 22a) von dem Sitz (21) trennt, wobei der Außenabschnitt (22"') von dem Sitz (21) durch die Kammer (22, 22a) getrennt ist, wobei der Trennabschnitt (22") und der Außenabschnitt (22''') eine solche jeweilige Wärmeleitfähigkeit aufweisen, dass sie eine Abführung der Wärme, die innerhalb der Kammer (22, 22a) abgestrahlt wird, über den Außenabschnitt (22"') aus dem Modul (20) heraus anstatt über den Trennabschnitt (22") in den Behälter (10) hinein begünstigen, wobei die Gehäuseeinrichtung (22') wahlweise mindestens eins der folgenden Merkmale aufweist:
- der Trenn- und der Außenabschnitt (22", 22"') sind derart, dass das Verhältnis von Wärme, die über den Außenabschnitt (22'") abgeführt wird, zu Wärme, die über den Trennabschnitt (22") abgeführt wird, mehr als 2 wie etwa mindestens 4, z. B. mindestens 9, beträgt;
- der Trennabschnitt (22") umgibt den Sitz (21) mindestens teilweise, wobei der Trennabschnitt (22") zum Beispiel eine den Sitz (21) umgebende aufrechte Wand und/oder eine einen Boden des Sitzes (21) begrenzende Mulde oder Plattform bildet; und
- die Gehäuseeinrichtung (22') umfasst einen Verbindungsabschnitt (22^{IV}), der den Trennabschnitt (22") mit dem Außenabschnitt (22"') verbindet, wie etwa einen Verbindungsabschnitt, der eine äußere Seitenwand der Gehäuseeinrichtung (22') bildet.

14. Maschine nach Anspruch 13, wobei der Außenabschnitt (22"'):
A) einen Sockel oder Fuß der Gehäuseeinrichtung (22') bildet, wobei die Gehäuseeinrichtung (22') wahlweise einen seitlichen Abschnitt (22^{IV}) beinhaltet, der sich wie folgt seitlich nach unten erstreckt:
- an einer Kante des Außenabschnitts (22"') entlang, wie etwa einen seitlichen Abschnitt (22^{IV}) mit einer oder mehreren Durchgangsöffnungen (22^{v}) zum Leiten von Wärme, die über den Außenabschnitt abgeführt wird, von der Unterseite des Außenabschnitts (22"') seitlich aus der Gehäuseeinrichtung (22') leitet; oder
- über eine Kante des Außenabschnitts, wobei der Außenabschnitt wahlwiese einen oder mehrere Abführungskanäle aufweist, um Wärme, die über den Außenabschnitt abgeführt wird, unter dem Seitenabschnitt aus der Gehäuseeinrichtung (22') heraus zu leiten;
und/oder
B) eine Kühlvorrichtung wie etwa mindestens eins von einem Kühler, einem Wärmeableiter, z. B. einem Ventilator, und einer Wärmesenke beinhaltet, wobei die Kühlvorrichtung wahlweise eine Vielzahl von Vorsprüngen (221) und Vertiefungen (222) umfasst, die eine Oberfläche zum Wärmeaustausch zwischen der Kammer (22, 22a) und dem Äußeren der Maschine (1) bildet.

15. Maschine nach einem der vorhergehenden Ansprüche, wobei die Kammer (22, 22a) umfasst:
- eine erste Kammer (22), die mindestens eins von dem Elektromotor (24), einer Steuereinheit (25) und einer Leistungsverwaltungseinheit (26) enthält, wie etwa einer Basiskammer (22) oder einer Kammer unterhalb des Sitzes (21); und
- eine zweite Kammer (22a), die einen Heiz- und/oder Kühlgenerator (23) enthält, wie etwa eine obere Kammer, z. B. eine Kammer, die um den Sitz (21) gebildet ist,
wobei wahlweise:
- die erste und die zweite Kammer durch einen Trennabschnitt (22^{V}) der Gehäuseeinrichtung (22') getrennt sind; und/oder
- wobei die zweite Kammer (22a) über die Gehäuseeinrichtung (21) an den Sitz (21) angrenzt und die erste Kammer (22) über die Gehäuseeinrichtung (22') vom Sitz (21) entfernt oder dazu benachbart ist.

## Revendications

1. Machine (1) destinée à homogénéiser une substance alimentaire, telle qu'un moussage de lait ou d'une substance à base de lait, sous forme de machine indépendante ou de machine incorporée dans un robot culinaire tel qu'un appareil de préparation de boisson p.ex. un appareil de préparation de café, une telle machine (1) comprenant :
- un récipient (10), tel qu'un récipient (10) mécaniquement et/ou électriquement passif, ayant une paroi latérale (11) et une paroi de fond (12) délimitant une cavité (10'), le récipient étant éventuellement
- généralement en forme de coupelle ou en forme de bol ou en forme de cylindre, dans laquelle la paroi latérale (11) est généralement verticale et la paroi de fond (12) est généralement plate ou incurvée ; et/ou
- pourvu d'un matériau extérieur thermiquement isolant (10") et/ou d'une poignée, pour la saisie et le déplacement facultatif du récipient (10) par une main humaine ;
- un propulseur (30) comprenant un membre de propulsion (31) formant une surface de propulsion (31', 31", 31''') qui peut être entraînée en rotation (r) autour d'une direction axiale centrale (30') de la surface de propulsion (31', 31", 31"') pour communiquer un effet mécanique à ladite substance alimentaire dans le récipient (10) pour homogénéiser différentes phases dans la substance alimentaire, éventuellement la surface de propulsion (31', 31", 31"') s'étendant sur une partie prédominante de la paroi de fond (12), telle qu'une surface de propulsion ayant une superficie qui est supérieure à 75 ou 85 % de la paroi de fond (12) de la cavité ; et
- un module (20) qui comporte un moyen de logement (22') qui contient une chambre interne (22, 22a) et qui délimite un siège (21), tel qu'un siège (21) généralement planaire ou cylindrique ou en forme de coupelle (21), sur ou dans lequel le récipient (10) est monté, tel que monté de façon amovible, la chambre (22, 22a) contenant un ou plusieurs composants électriques (23, 24, 25, 26) qui incluent un moteur électrique (24) pour entraîner le membre de propulsion (31) dans le récipient (10) et éventuellement une unité de commande (25) et/ou une unité de gestion d'alimentation (26),
le moteur électrique (24) ayant un axe d'entraînement de sortie (24') avec un dispositif d'entraînement (24") conçu pour entraîner dans le récipient (10) un dispositif suiveur (35) du propulseur (30), éventuellement le dispositif d'entraînement (24'") et le dispositif suiveur (25) étant conçus pour tourner autour de la direction axiale centrale (30'), le dispositif d'entraînement (24") et le dispositif suiveur (35) étant couplés magnétiquement à travers la paroi latérale (11) et/ou la paroi de fond (12) du récipient (10) et dans lesquels :
- le dispositif d'entraînement (24") comprend un élément (24a) générateur de champ magnétique de couplage qui est agencé de manière à être couplé magnétiquement à un élément ferromagnétique (36) correspondant du dispositif suiveur (35) ;
- le dispositif suiveur (35) comprend un élément (36) générateur de champ magnétique de couplage qui est agencé pour être couplé magnétiquement à un élément ferromagnétique (24a) correspondant du dispositif d'entraînement (24") ; ou
- le dispositif d'entraînement (24") comprend un élément (24a) générateur de champ magnétique de couplage qui est agencé de manière à être couplé magnétiquement à un élément (36) générateur de champ magnétique de couplage correspondant du dispositif suiveur (35),
**caractérisée en ce que** le module (20) et le dispositif suiveur (35) sont chacun pourvus d'un élément (24"', 37) générateur de champ magnétique de retrait, dans lesquels les éléments de retrait (24''', 37) se font face par l'intermédiaire de la paroi de fond (12) du récipient (10), éventuellement les éléments de retrait se faisant face par l'intermédiaire du moyen de logement (22'), les éléments de retrait étant montés dans une orientation de répulsion mutuelle pour faciliter une séparation du dispositif suiveur (35) par rapport au dispositif d'entraînement (24"), éventuellement l'élément de retrait (24''', 37) étant associé à une ou plusieurs des caractéristiques suivantes :
A) les éléments de retrait (24"', 37) se faisant face l'un l'autre le long d'un axe (30') qui est colinéaire ou généralement parallèle à la direction axiale centrale (30'), les éléments de retrait (24"', 37) comprenant par exemple une paire d'éléments de retrait (24"', 37) se faisant face le long d'un axe (30') qui est colinéaire à la direction axiale centrale (30') ;
B) les éléments de retrait (24''', 37) générant conjointement une force de répulsion telle qu'une séparation du dispositif suiveur (35) du dispositif d'entraînement (24") lorsqu'ils sont couplés magnétiquement exige une force maximale qui est inférieure à 15 N, telle qu'inférieure à 10 N, par ex. inférieure à 5 N ;
C) le module (20) et le dispositif suiveur (35) étant pourvus d'une pluralité de paires de tels éléments générateurs de champ magnétique de retrait qui sont montés dans une orientation mutuellement répulsive, éventuellement montés autour de la direction axiale centrale ; et
D) l'élément de retrait (24"') du module (20) étant situé dans ou sur : le dispositif d'entraînement (24") et/ou le moyen de logement (22').

2. Machine selon la revendication 1, dans laquelle le dispositif suiveur (35) s'étend :
- sur une partie prédominante de la paroi de fond (12) du récipient (10), le dispositif suiveur (35) s'étendant typiquement sur au moins 75 ou 85 % d'une superficie de la paroi de fond (12) ; ou
- en travers d'une partie substantielle de la paroi de fond (12) le long d'un diamètre de celle-ci, le dispositif suiveur (35) s'étendant typiquement sur au moins 75 ou 85 % d'un diamètre de la paroi de fond,
et dans laquelle le dispositif d'entraînement (24) s'étend :
- sur une partie prédominante d'une partie de fond du siège (21), le dispositif d'entraînement (24) s'étendant typiquement sur au moins 75 ou 85 % d'une superficie de la partie de fond ; ou
- en travers d'une partie substantielle de la partie de fond du siège (21) le long d'un diamètre de celui-ci, le dispositif d'entraînement (24) s'étendant typiquement sur au moins 75 ou 85 % d'un diamètre de la partie de fond,
le ou les éléments (24a, 36) générateurs de champ magnétique de couplage et, lorsqu'ils sont présents, le ou les élément(s) ferromagnétique(s) (24a, 36) étant positionnés au niveau de parties extrêmes ou périphériques du dispositif suiveur (35) et du dispositif d'entraînement (24").

3. Machine selon la revendication 1 ou 2, dans laquelle les éléments de couplage (24a, 36) se font face par l'intermédiaire de la paroi latérale (11) et/ou de la paroi de fond (12) du récipient (10) et éventuellement par l'intermédiaire du moyen de logement (22'), les éléments (24a, 36) se faisant face par exemple par l'intermédiaire de :
- la paroi de fond (12) le long d'un axe de couplage (30") qui est généralement parallèle à la direction axiale centrale (30') ; et/ou
- la paroi latérale le long d'un axe de couplage qui est généralement orthogonal à la paroi latérale, tel qu'un axe de couplage qui intercepte la direction axiale centrale.

4. Machine selon une quelconque revendication précédente, dans laquelle :
- le ou les éléments (24a, 36, 24"', 37) générateurs de champ magnétique de couplage et de retrait comprennent chacun un élément électroaimant ou un élément aimant permanent, par exemple constitué d'au moins l'un parmi le fer, le nickel, le cobalt, des métaux des terres rares, par exemple un lanthanide et des alliages et oxydes contenant de tels métaux ainsi que des polymères (par exemple, des plastiques) portant de tels éléments et composants ; et/ou
- le ou les éléments ferromagnétiques (24a, 36) est/sont constitués d'au moins l'un parmi Co, Fe, Fe₂O₃, FeOFe₂O₃, NiOFe2C>3, CuOFe₂O₃, MgO Fe₂O₃, Nd₂Fe₁₄B, Mn, Bi, Ni, MnSb, MnOFe₂O₃, Y₃Fe₅O₁₂, Cr0₂, MnAs, Gd, Dy, EuO, Cu₂MnAI, Cu₂Mnln, Cu₂MnSn, Ni₂MnAl, Ni₂Mnln, Ni₂MnSn, Ni₂MnSb, Ni₂MnGa, Co₂MnAl, Co2MnSi, Co2MnGa, Co₂MnGe, SmCo₅, Sm₂C017, Pd₂MnAl, Pd₂MnAl, Pd₂Mnln, Pd₂MnSn, Pd₂MnSb, Co₂FeSi, Fe₃Si, Fe₂Val, Mn₂VGa et Co₂FeGe.

5. Machine selon une quelconque revendication précédente, dans laquelle le dispositif d'entraînement (24") fait face directement à la paroi latérale (11) et/ou à la paroi de fond (12) du récipient (10) ou fait face indirectement à la paroi latérale (11) et/ou à la paroi de fond (12) du récipient (10) par l'intermédiaire d'une paroi latérale interne et/ou une paroi de fond interne de logement (22") délimitant le siège (21).

6. Machine selon une quelconque revendication précédente, dans laquelle le propulseur (30) a, en plus du membre de propulsion (31), un pied (35, 38) pour espacer le membre de propulsion (31) au-dessus de la paroi de fond (12) du récipient (10), tel qu'un pied (35, 38) espacé sous le membre de propulsion (31) d'une distance (d) dans la plage de 0,5 à 2,5 cm, par ex. 1 à 2 cm.

7. Machine selon une quelconque revendication précédente, dans laquelle le propulseur (30) a un pied (35, 38) comprenant :
- une surface de contact courbée convexe orientée vers le bas (38), par ex. une goupille en saillie vers le bas (38), de telle sorte que le propulseur (30) repose sur la paroi de fond (12) entièrement par l'intermédiaire de ladite surface de contact courbée convexe (38), le contact courbé convexe étant en contact avec la paroi de fond (12) sur une superficie totale typiquement inférieure à 5 mm², telle que moins de 4 par ex. moins de 3, par exemple moins de 2, par exemple moins de 0,3 mm², éventuellement la surface de contact (38) étant constituée d'un matériau polymère rigide, tel qu'un plastique dur ou de l'acier inoxydable apte au contact alimentaire et étant supportée par une surface de la paroi de fond (12) constituée d'un matériau céramique, tel que du PTFE ou de l'acier inoxydable apte au contact alimentaire, par ex. AiSi 304 ; et/ou
- le dispositif suiveur (35).

8. Machine selon une quelconque revendication précédente, dans laquelle la surface de propulsion (31', 31", 31"') est généralement en forme de disque ou de forme conique ou en forme d'étoile, éventuellement la surface de poussée ayant au moins une partie (31', 31", 31'") en saillie ou rabaissée dans une direction parallèle à la direction axiale (30'), telle qu'une partie (31', 31") ondulée le long d'une direction circulaire autour de la direction axiale (30') ou une surface avec une partie généralement dressée radiale en saillie ou rabaissée (31''').

9. Machine selon la revendication 8, dans laquelle le membre de propulsion (31) présente au moins une ouverture (31a, 31b1, 31b2, 31b4, 31 c, 31c', 31d1, 31d2), telle qu'une ouverture d'affinage de bulles (31a, 31b1, 31b2, 31 b4, 31 c, 31c', 31d1, 31d2) par ex. fonctionnant en divisant les bulles de gaz contenues dans ladite substance alimentaire par exemple pour diviser des bulles d'air contenues dans du lait, qui s'étend à travers le membre (31) depuis la surface de propulsion (31, 31", 31"') vers une surface opposée (31^{IV}) du membre (31), ladite ouverture (31a, 31b1, 31b2, 31b4, 31b4, 31c, 31c', 31d1, 31d2) étant :
- délimitée par au moins une portion (31bx, 31by, 31cx, 31cy, 31cx', 31cy') qui a le long de l'ouverture (31a, 31b1, 31b2, 31b4, 31c, 31c', 31d1, 31d2) une orientation (31n) qui est à un angle détaché d'une direction de mouvement (31r) de la partie (31bx, 31by, 31cx, 31cy, 31cx', 31cy') lorsque la surface de propulsion (31', 31 ", 31''') est entraînée en rotation (r) autour de la direction axiale centrale (30'), telle qu'une orientation (31n) qui est orthogonale à la direction de mouvement (31r) ; et/ou
- confinée par un secteur circulaire notionnel (31x, 31y, 31z) défini sur la surface de propulsion en forme de disque ou de forme conique (31', 31", 31'") et s'étendant jusqu'à la surface opposée (31^{IV}), éventuellement :
- un tel secteur (31x, 31 y, 31z) s'étendant sur un angle dans la plage allant de 1° à 359°, telle que 5° à 270°, par ex. 15° à 180°, par exemple 30° à 90° ; et/ou
- des portions (31 by, 31 by, 31 cx, 31cy, 31 dx, 31 dy) du membre (31) qui sont adjacentes à des rayons (31x, 31y) définissant un tel secteur (31x, 31y, 31z) et qui délimitent une telle ouverture (31a, 31b1, 31b2, 31b4, 31b4, 31 c, 31d1, 31d2) étant conçues pour partager des bulles de gaz contenues dans ladite substance alimentaire lorsque les bulles de gaz s'étendent dans ou à travers l'ouverture (31a, 31b1, 31b2, 31b4, 31c, 31c', 31d1, 31d2) tandis que la surface de propulsion (31', 31", 31'") est entraînée en rotation.

10. Machine selon la revendication 9, dans laquelle une ou plusieurs ouvertures (31a, 31b1, 31b2, 31b4, 31b4, 31c, 31d1, 31d2) présentent au moins l'une des caractéristiques suivantes :
A) au moins une ouverture (31a) ayant une forme généralement arquée, par ex. une forme générale de rein ou de haricot, telle qu'une forme (31a) s'étendant autour de la direction axiale centrale (30') ;
B) au moins une ouverture (31b1, 31b2, 31b3, 31b4) ayant une forme généralement circulaire, telle qu'une forme circulaire qui est située à distance de la direction axiale centrale (30') ;
C) au moins une ouverture (31c, 31c') ayant une forme généralement elliptique ou ovale, telle qu'une forme s'étendant radialement sur le membre (31) ;
D) au moins une ouverture (31dl, 31d2) ayant une forme généralement polygonale telle qu'une forme qui est située en dehors de la direction axiale centrale (31') ;
E) au moins une ouverture (31c) s'étendant en tant qu'ouverture(s) individuelle(s) à partir d'une position (31ca) adjacente à la direction axiale centrale (30') jusqu'à une position (31cb) adjacente à un périmètre périphérique du membre (31) ;
F) au moins une ouverture (31a, 31bl, 31b2, 31 b4, 31 b4, 31 c, 31dl, 31d2) étant située à côté de la direction axiale centrale (30') ;
G) au moins une ouverture (31c') étant située sur la direction axiale centrale (30') ; et
H) une pluralité d'ouvertures (31b1, 31b2, 31b3, 31b4 ;31c, 31c' ; 31d1, 31d2) formant une ouverture ajourée de deux ouvertures espacées ou plus (31b1, 31b2, 31b3, 31b4 ;31c, 31c' ;31d1, 31d2), éventuellement :
- les ouvertures (31b1, 31b2, 31b3, 31b4 ;31c, 31c' ;31d1, 31d2) étant à angles distincts autour de la direction axiale centrale (30') ; et/ou
- les ouvertures (31b1, 31b2, 31b3, 31b4 ;31c, 31c' ;31d1, 31d2) étant contenues à l'intérieur de et s'étendent radialement sur différents espaces annulaires notionnels juxtaposés ou se chevauchant (31ba_31bf, 31bb_31be, 31bc_31bg, 31bd_31bh ; 31da_31dd, 31db_31dc) qui s'étendent ensemble de manière sensiblement ininterrompue sur un espace annulaire continu notionnel global (31ba_31 bb ;31da_31db).

11. Machine selon une quelconque revendication précédente, dans laquelle les composants électriques comprennent un ou plusieurs générateurs (23) pour chauffer et/ou refroidir ladite substance alimentaire dans le récipient (10), tel qu'un générateur (23) qui est commandé par une unité de commande (25) selon un programme de traitement de la substance alimentaire, tel qu'un programme d'entraînement du propulseur (30) avec ou sans chauffage ou refroidissement par le générateur (23).

12. Machine selon la revendication 11, dans laquelle le ou au moins l'un desdits générateurs (23) est configuré pour générer un champ électromagnétique oscillant dirigé vers le récipient (10) pour chauffer ladite substance alimentaire dans le récipient (10), éventuellement le générateur (23) étant configuré pour :
- induire un courant électrique de chauffage dans un composant (11) pouvant être chauffé par induction d'une telle machine (1), le composant (11) pouvant être chauffé par induction ayant une surface (11') pour rayonner de la chaleur dans la cavité (10'), le composant (11) étant situé dans la cavité ou formant une paroi (11) du récipient (10), moyennant quoi la surface de composant (11') délimite la cavité (10'), éventuellement le générateur (23) comprenant au moins une bobine d'induction, telle qu'une bobine d'induction située adjacente à la section de séparation (22") ; et/ou
- émettre des micro-ondes pour générer des micro-ondes de chauffage directement dans ladite substance alimentaire dans le récipient (10).

13. Machine selon une quelconque revendication précédente, dans laquelle au moins l'un parmi ledit ou lesdits composants électriques (23, 24, 25, 26) rayonne de la chaleur à l'intérieur de la chambre (22, 22a) lorsqu'il est alimenté électriquement, telle que la chaleur générée par une résistance électrique du composant (23, 24, 25, 26), le moyen de logement (22') ayant une section de séparation (22") et une section extérieure (22''') distincte de la section de séparation (22"), la section de séparation et la section extérieure délimitant au moins une partie de la chambre (22, 22a), la section de séparation (22''') séparant la chambre (22, 22a) du siège (21), la section extérieure (22''') étant séparée du siège (21) par la chambre (22, 22a), la section de séparation (22") et la section extérieure (22''') ayant des conductivités thermiques respectives telles qu'elles favorisent une évacuation de ladite chaleur rayonnée à l'intérieur de la chambre (22, 22a) à l'extérieur du module (20) par l'intermédiaire de la section extérieure (22''') plutôt que dans le récipient (10) par l'intermédiaire de la section de séparation (22"), éventuellement le moyen de logement (22') possédant au moins l'une des caractéristiques suivantes :
- les sections de séparation et extérieure (22", 22"') sont telles que le rapport de la chaleur évacuée par l'intermédiaire de la section extérieure (22''') à la chaleur évacuée par l'intermédiaire de la section de séparation (22") est de plus de 2, tel qu'au moins 4 par ex. au moins 9 ;
- la section de séparation (22") entoure au moins partiellement le siège (21), la section de séparation (22") formant par exemple une paroi verticale entourant le siège (21) et/ou un creux ou une plateforme délimitant un fond du siège (21) ; et
- le moyen de logement (22') comprend une section de jointure (22^{IV}) qui joint la section de séparation (22") à la section extérieure (22"'), telle qu'une section de jointure formant une paroi latérale externe du moyen de logement (22').

14. Machine selon la revendication 13, dans laquelle la section extérieure (22''') :
A) forme une base ou un pied du moyen de logement (22'), le moyen de logement (22') incluant éventuellement une section latérale (22^{IV}) s'étendant latéralement vers le bas :
- le long d'un bord de la section extérieure (22"'), comme une section latérale (22^{IV}) ayant une ou plusieurs ouvertures traversantes (22^{v}) pour faire passer la chaleur évacuée par l'intermédiaire de la section extérieure depuis sous la section extérieure (22''') vers l'extérieur latéralement du moyen de logement (22') ; ou
- jusqu'au-dessus d'un bord de la section extérieure, la section extérieure ayant éventuellement un ou plusieurs canaux d'évacuation pour faire passer la chaleur évacuée par la section extérieure en dessous de la section latérale vers l'extérieur du moyen de logement (22') ;
et/ou
B) inclut un dispositif de refroidissement tel qu'au moins l'un parmi un radiateur, un dissipateur, par ex. un ventilateur, et un dissipateur thermique, éventuellement le dispositif de refroidissement comprend une pluralité de parties saillantes (221) et de cavités (222) formant une surface pour un échange thermique entre la chambre (22, 22a) et l'extérieur d'une telle machine (1).

15. Machine selon une quelconque revendication précédente, dans laquelle la chambre (22, 22a) comprend :
- une première chambre (22) contenant au moins l'un parmi le moteur électrique (24), une unité de commande (25) et une unité de gestion d'alimentation (26), telle qu'une chambre de base (22) ou une chambre en dessous du siège (21) ; et
- une deuxième chambre (22a) contenant un générateur de chauffage et/ou de refroidissement (23), telle qu'une chambre supérieure par ex. une chambre formée autour du siège (21),
éventuellement :
- les première et deuxième chambres étant séparées par une section de séparation (22^{v}) du moyen de logement (22') ; et/ou
- la deuxième chambre (22a) étant adjacente au siège (21) par l'intermédiaire du moyen de logement (21) et la première chambre (22) étant éloignée du siège (21) ou adjacente à celui-ci par l'intermédiaire du moyen de logement (22').
